# FASCICULE DE BREVET EUROPEEN

(11) **EP 1 554 562 B1**
(45) Date de publication et mention de la délivrance du brevet: **10.12.2008**
(21) Numéro de dépôt: 03785991.5
(22) Date de dépôt: 20.10.2003
(51) Int. Cl.: G01N 9/10, G01N 9/26

(54) **DISPOSITIF DE MESURE DE LA MASSE VOLUMIQUE ET/OU DE LA DENSITE D'UN LIQUIDE**
DICHTEMESSGERÄT FÜR FLÜSSIGKEITEN
DEVICE FOR MEASURING THE DENSITY AND/OR SPECIFIC GRAVITY OF A LIQUID

(30) Priorité: 22.10.2002 FR 0213140
(43) Date de publication de la demande: 20.07.2005
(73) Titulaire: Densiline, 10340 Rosières (FR)
(72) Inventeur: GALICHET, Gilles, F-10430 ROSIERES PRES TROYES (FR)
(74) Mandataire: Laget, Jean-Loup
(86) Numéro de dépôt international: PCT/FR2003/003096
(87) Numéro de publication internationale: WO 2004/038387

(56) Documents cités:
- WO-A-02/01187
- DE-U- 9 006 275
- FR-A- 2 563 339
- FR-A- 2 733 318
- US-A- 3 589 200
- US-A- 4 400 978
- PATENT ABSTRACTS OF JAPAN vol. 008, no. 211 (P-303), 26 septembre 1984 (1984-09-26) & JP 59 094036 A (NOUKEN KOGYO KK), 30 mai 1984 (1984-05-30)

## Description

La présente invention concerne un dispositif de mesure de la masse volumique et/ou de la densité d'un liquide du type comprenant une enceinte étanche au liquide à mesurer.

La mesure de la masse volumique intervient principalement dans le contrôle des procédés industriels continus ou discontinus de transformation, tels que la fermentation, les réactions chimiques avec dégagement gazeux, les mélanges, les émulsions ou autres. De façon générale, les dispositifs de mesure de la masse volumique ou de la densité d'un liquide (densimètre manuel à débit dérivé, à lame vibrante, à mesure de dégagement gazeux, etc.) présentent de nombreux inconvénients comme leur lecture difficile, leur utilisation délicate, leur prix, leur coût d'installation élevé, etc.

Pour pallier de tels inconvénients, le demandeur a proposé un dispositif de mesure de la masse volumique d'un liquide décrit dans la demande de brevet français N° FR-A-2.733.318. Ce dispositif comporte une enceinte dont chacune des extrémités est obturée par une membrane souple qui coopère par sa surface interne avec un organe de transmission relié à un capteur de force à jauge de contrainte, ladite enceinte étant immergée dans une cuve remplie d'un liquide dont on veut mesurer la masse volumique. Ce densimètre d'entretien simple permet de mesurer la masse volumique d'un liquide quelle que soit sa viscosité. Néanmoins, lorsqu'il s'agit de mesurer un liquide chargé, ce qui est notamment le cas dans le domaine agroalimentaire, cet appareil présente des zones de rétention où risquent de se loger des impuretés. Ce dispositif présente également un inconvénient du fait du positionnement des membranes souples à chacune des extrémités de l'enceinte de mesure. En effet, celles-ci comportent une surface importante exposée aux chocs et aux projections et peuvent ainsi se percer lors du fonctionnement ou de la manipulation de l'appareil. Enfin, cet appareil ne dispose pas de système de protection du capteur de force et ainsi, sous l'effet de surcharge, celui-ci risque de donner une indication de lecture erronée de la masse volumique du liquide, voire de se détériorer.

Le demandeur a par ailleurs proposé, dans le cadre du dépôt d'une demande internationale WO 02/01187, un dispositif de mesure de la masse volumique d'un liquide comprenant une enceinte étanche au liquide à mesurer, dont chacune des extrémités est obturée par une paroi, ces parois coopérant entre elles par l'intermédiaire d'au moins un organe de liaison. Ce dispositif est caractérisé en ce qu'il comporte une pièce de solidarisation reliée à la partie mobile d'un capteur de force à jauge de contrainte et solidaire de l'une des parois, la partie fixe du capteur de force demeurant solidaire de l'enceinte. Une telle construction nécessite de disposer d'une enceinte formée de plusieurs éléments animés d'un déplacement relatif les uns par rapport aux autres. Ces différents éléments de l'enceinte sont reliés les uns aux autres par l'intermédiaire de membranes qui sont sollicitées au cours de la déformation pour permettre la mesure de la masse volumique. Cette conception engendre à nouveau des risques d'usure prématurée du dispositif du fait du rôle primordial des membranes.

D'autres dispositifs de mesure de la densité d'un liquide sont par ailleurs connus à travers les documents DE-U-9006275, US-3.589.200, US-4.400.978, FR-2.563.339 et JP-59094036.

Un but de la présente invention est donc de proposer un dispositif de mesure de la masse volumique et/ou de la densité d'un liquide dont la conception autorise une mesure en continu sur le produit et non sur un échantillon prélevé, ce dispositif s'affranchissant d'une enceinte déformable dont la déformation serait liée à la présence de membrane de manière d'une part à augmenter la précision de la lecture de la mesure, d'autre part à réduire les risques d'usure prématurée.

Un autre but de la présente invention est de proposer un dispositif de mesure dont la conception permet de maintenir les éléments sensibles du dispositif, en particulier les organes de mesure, tels que le capteur, à l'intérieur d'une enceinte étanche empêchant toute dégradation de ces derniers.

Un autre but de la présente invention est de proposer un dispositif de mesure du type précité, de conception extrêmement simple, d'entretien réduit, d'usure limitée, ne nécessitant pas de spécialiste pour son installation et présentant une précision extrême des mesures.

A cet effet, l'invention a pour objet un dispositif de mesure de la masse volumique et/ou de la densité d'un liquide du type comprenant une enceinte étanche au liquide à mesurer, caractérisé en ce que l'enceinte est constituée d'une enveloppe rigide indéformable renfermant au moins un corps, dit corps de référence, maintenu en suspension dans ladite enceinte à l'état totalement immergé de cette dernière par l'intermédiaire d'au moins un organe de suspension faisant saillie à travers au moins un orifice fermé de manière étanche de ladite enceinte, cette enceinte étant mobile par rapport au corps de référence pour occuper, à l'état totalement immergé, une position relative par rapport audit corps fonction de la masse volumique du liquide à l'intérieur duquel le dispositif est immergé, cette position étant détectée et/ou mesurée par un dispositif de détection et/ou de mesure logé à l'intérieur de l'enceinte.

Grâce à la conception d'un dispositif de mesure de la masse volumique et/ou de la densité d'un liquide dans lequel l'enceinte renfermant des moyens de mesure et/ou de détection de la position prise par l'enceinte est animée, sous l'effet de la poussée d'Archimède exercée sur ladite enceinte, d'un déplacement relatif par rapport à un corps de référence renfermé à l'intérieur de l'enceinte en fonction de la masse volumique du liquide dans lequel le dispositif est immergé, il en résulte une mesure extrêmement précise de la masse volumique.

Selon une forme de réalisation préférée de l'invention, l'enceinte, mobile par rapport au corps de référence pour occuper, à l'état totalement immergé, une position relative par rapport au corps fonction de la masse volumique du liquide à l'intérieur duquel le dispositif est immergé, renferme des moyens de mesure de forces, tels qu'un capteur de forces, cette enceinte exerçant, dans ladite position, directement ou' par l'intermédiaire d'une pièce solidaire en déplacement de l'enceinte, un effort de compression ou de traction sur les moyens de mesure de forces limités en déplacement par le corps de référence, lui-même insensible aux efforts exercés par ladite enceinte.

La mesure peut ainsi s'effectuer par l'intermédiaire de moyens de mesure de forces dont le déplacement est limité par le corps de référence dont au moins une des surfaces constitue, lors de la mesure, une surface d'appui et/ou de retenue des moyens de mesure de forces, ce corps de référence étant insensible aux efforts exercés par ladite enceinte du fait de sa conception.

L'invention sera bien comprise à la lecture de la description suivante d'exemples de réalisation, en référence aux dessins annexés dans lesquels :
la figure 1 représente une vue en coupe d'un dispositif conforme à l'invention hors d'un liquide ;
la figure 2 représente une vue en coupe du dispositif de la figure 1 en position de mesure après variation de la position relative de l'enceinte par rapport au corps de référence ;
la figure 3 représente une vue schématique simplifiée d'un autre mode de réalisation de l'invention et
la figure 4 représente une vue schématique simplifiée d'un autre mode de réalisation de l'invention.

Le dispositif de mesure, objet de l'invention, permet, comme mentionné ci-dessus, la mesure de la masse volumique et/ou de la densité d'un liquide. Ce dispositif comprend une enceinte 1 étanche au liquide à mesurer. Dans l'exemple représenté, cette enceinte affecte la forme d'un corps d'allure générale cylindrique, de préférence lesté au moyen d'un lest 8,le lest ayant pour fonction de permettre à l'enceinte d'occuper une position d'équilibre organisée autour de l'axe du cylindre à l'état immergé du dispositif. Cette enceinte 1 est constituée d'une enveloppe rigide indéformable qui est de préférence réalisée en un matériau agréé par les réglementations en vigueur dans l'industrie agroalimentaire. L'enceinte peut ainsi être réalisée en PVC, inox ou autre. Cette enceinte, qui constitue ainsi un ensemble monobloc, renferme au moins un corps 3, dit corps de référence, maintenu suspendu dans ladite enceinte 1 à l'état totalement immergé de cette dernière par l'intermédiaire d'au moins un organe 4 de suspension faisant saillie à travers au moins un orifice 5 fermé de manière étanche de ladite enceinte 1. Dans les exemples représentés, au moins l'un des organes 4 de suspension est constitué d'un élément tubulaire pour le passage des fils nécessaires à l'électronique d'un capteur 2 de force également logé à l'intérieur de l'enceinte 1. Cet organe 4 de suspension comporte, de préférence au voisinage de sa liaison avec le corps 3 de référence, une partie rigide. Dans sa partie externe au dispositif, proche de sa zone de fixation, cet organe 4 de suspension s'étend sensiblement dans l'axe de l'enceinte 1 cylindrique de telle sorte que l'axe de suspension est confondu avec l'axe longitudinal du cylindre. L'organe 4 de suspension est généralement fixé, par sa partie supérieure externe au dispositif, à la paroi d'une cuve renfermant le liquide à analyser. La fixation doit s'opérer de telle sorte que le dispositif soit complètement immergé, qu'il ne repose pas au fond de la cuve et qu'il ne soit pas entravé dans ses mouvements en touchant par exemple à une paroi.

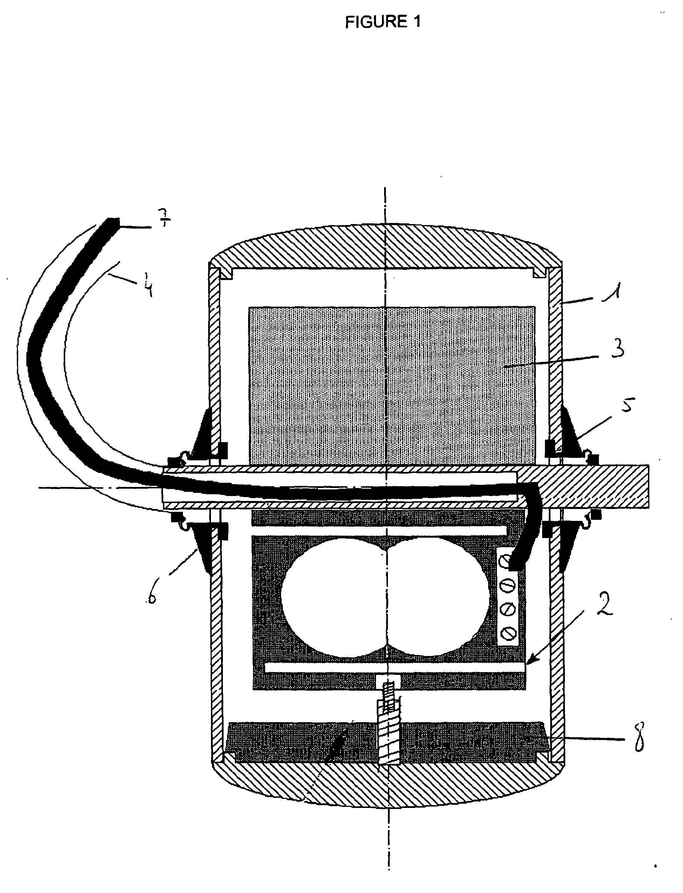

L'enceinte 1 comporte quant à elle au moins un, de préférence deux, orifice(s) 5 de passage d'un organe 4 de suspension. Chaque orifice 5 est fermé respectivement par l'intermédiaire d'une membrane 6 entourant ledit organe 4 de suspension. Cette membrane 6 affecte, à l'état non comprimé, une forme d'allure générale conique. A l'état insérée dans l'orifice, elle délimite au moins un soufflet coaxial à la portion de l'organe 4 de suspension traversant l'orifice 5, comme l'illustre la figure 1. Cette membrane 6 autorise un déplacement relatif entre corps 3 et enceinte 1 du fait du jeu qu'elle instaure au niveau de l'organe 4 de suspension. Les dimensions de cette membrane sont donc fonction de la plage de déplacement de l'enceinte par rapport au corps 3 de référence et des amplitudes de mouvement autorisées au niveau dé l'enceinte.

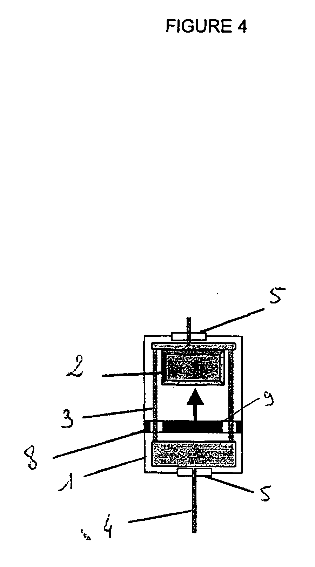

Dans le cas où l'enceinte comporte deux orifices 5 de passage, ceux-ci sont de préférence ménagés en regard et peuvent être positionnés sur l'enceinte de manière coaxiale à l'axe vertical de suspension du corps de référence comme l'illustre la figure 4. Ces orifices 5 de passage d'un organe 4 de suspension peuvent encore être ménagés en regard et positionnés sur un axe sensiblement perpendiculaire à l'axe vertical de suspension du corps 3 de référence comme l'illustrent en particulier les figures 1 à 3.

Cette enceinte 1 est ainsi animée d'un déplacement relatif par rapport au corps 3 de référence suspendu à l'intérieur de l'enceinte au cours de son immersion dans le liquide dont la masse volumique doit être mesurée et occupe, à l'état totalement immergé, une position par rapport au corps 3 de référence fonction de la masse volumique du liquide à l'intérieur duquel le dispositif est immergé. En effet, la position prise par l'enceinte 1 est directement fonction de la poussée d'Archimède subie par ladite enceinte. A l'état immergé, l'enceinte 1 occupe donc une position résultant de la poussée d'Archimède appliquée sur ladite enveloppe de l'enceinte. Des moyens 2 de mesure et/ou de détection de la position prise par l'enceinte 1 par rapport au corps 3 de référence à l'état immergé du dispositif sont donc prévus. Ces moyens 2 peuvent affecter un grand nombre de formes et traduisent généralement la position prise par l'enceinte par une variation de signal électrique. Dans les exemples représentés, ces moyens sont constitués par des moyens de mesure de la force de réaction exercée par l'enceinte à l'état immergé sur lesdits moyens 2. Cette force peut se traduire par une compression ou une traction exercée par l'enceinte sur les moyens 2 de mesure de force limités en déplacement par le corps 3 de référence. Ces moyens de mesure sont par exemple constitués d'un capteur 2 de force. D'autres moyens de mesure et/ou de détection de la position de l'enceinte, tels que des moyens optiques, pourraient être envisagés de manière équivalente. Ils he sont pas décrits plus en détail ci-après.

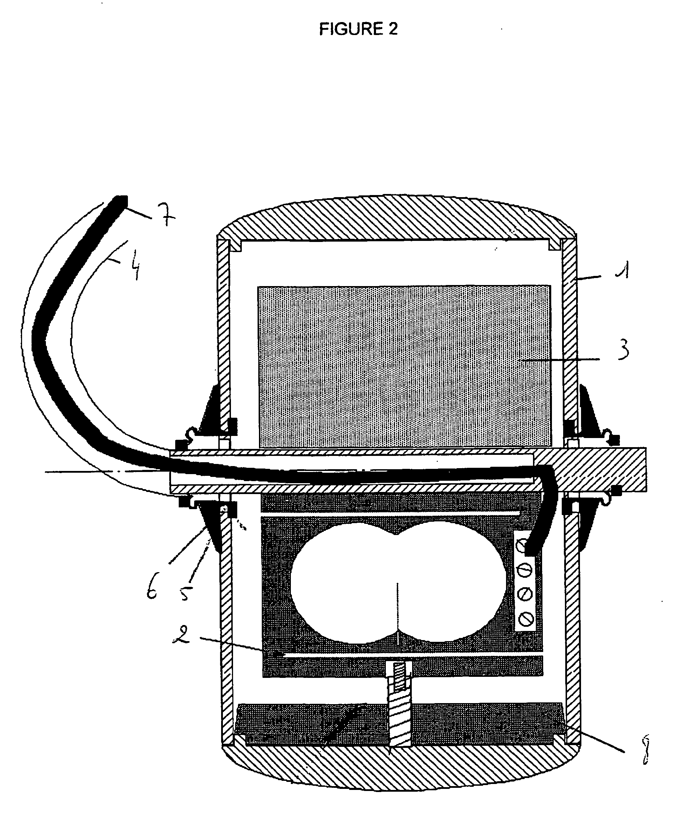

Ainsi, par exemple, dans le cas représenté à la figure 2, l'enceinte 1 exerce sur le capteur 2 de force, une force de compression proportionnelle à la masse volumique du liquide dans lequel elle est immergée. La résultante des forces qui s'appliquent sur le capteur 2 de force tient compte d'une part du poids total de l'enceinte, constitué du poids de l'enveloppe et du lest 8 lorsque ce dernier est présent, ce lest étant solidaire de l'enveloppe, et de la poussée d'Archimède d'autre part, cette poussée d'Archimède étant fonction de la masse volumique du liquide dans lequel le dispositif est immergé. Plus la masse volumique est élevée, plus la poussée d'Archimède est importante. Il en résulte une compression plus importante du capteur de force traduisant une masse volumique plus élevée. C'est ainsi que l'enceinte 1 exerce, à l'état immergé et en fonction de la masse volumique du liquide à l'intérieur duquel le dispositif est immergé, un effort de compression ou de traction variable sur le capteur, ce capteur étant limité en déplacement par le corps 3 de référence, lui-même insensible aux efforts exercés par ladite enceinte. Ce corps 3 de référence est ainsi rendu insensible aux efforts exercés par ladite enceinte 1, soit grâce à son poids, largement supérieur aux efforts exercés par ladite enceinte, soit en raison de son montage à travers l'organe 4 de suspension. Il doit donc être considéré que ce corps 3 suspendu, une fois le dispositif positionné, se maintient à un niveau constant et constitue en cela une référence pour les moyens 2 de mesure.

Partant de ce principe, dans lequel le capteur ou tout autre moyen de mesure équivalent mesure la position prise par l'enceinte par rapport au corps de référence, en fonction de la masse volumique du liquide à l'intérieur duquel le dispositif est immergé, divers modes de réalisation peuvent être envisagés.

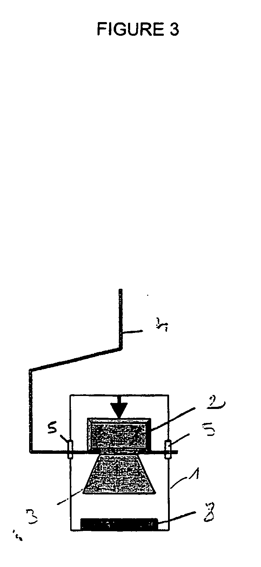

Ainsi, dans un premier mode de réalisation de l'invention, à l'état suspendu du corps 3 de référence, les moyens de mesure de forces sont positionnés au-dessus du corps 3 de référence comme l'illustre en particulier la figure 3. Dans ce cas, les moyens de mesure de forces, tels qu'un capteur de forces, comprennent une partie fixe et une partie mobile, la partie fixe étant couplée au corps 3 de référence, la partie mobile à l'enceinte 1. Ce capteur peut alors indifféremment être soumis à une force de compression ou à une force de traction en fonction de la direction de la force résultant de la poussée d'Archimède et du poids total de l'enceinte. Dans le cas d'une force de traction, une liaison du capteur d'une part au corps de référence, d'autre part à l'enceinte est nécessaire. Dans le cas d'une compression, une seule liaison respectivement à l'enceinte ou au corps de référence est nécessaire sous réserve que la force résultante soit telle que l'enceinte s'applique dans tous les cas sur le capteur. Dans le mode de réalisation représenté à la figure 4, l'enceinte exerce, par l'intermédiaire d'une pièce 9, telle qu'une cloison intérieure solidaire en déplacement de l'enceinte, un effort de compression sur le capteur 2 de forces.

Dans un autre mode de réalisation de l'invention conforme aux figures 1 et 2, à l'état suspendu du corps de référence, les moyens de mesure de forces sont positionnés au-dessous du corps 3 de référence. Dans ce mode de réalisation, les moyens de mesure de forces peuvent être solidaires d'une paroi interne de l'enceinte ou bien encore les moyens de mesure de forces peuvent être solidaires du corps de référence. Ces moyens de mesure de forces peuvent également être solidaires d'une paroi interne de l'enceinte et solidaires du corps de référence, la partie fixe des moyens de mesure de forces étant solidaire du corps de référence, la partie mobile de la paroi interne de l'enceinte. La figure 2 illustre par rapport à la figure 1 la position prise par l'enceinte après immersion dans le liquide.

Indépendamment de leur position, ces moyens de mesure de forces peuvent être constitués par une jauge de contrainte, un capteur de pression, un transmetteur d'effort ou une résistance de détection des forces comme cela est bien connu à ceux versés dans cet art. Dans les exemples représentés, le capteur est un corps déformable déformé en fonction de la position prise par l'enceinte 1 par rapport au corps 3 de référence, cette position étant directement fonction de la masse volumique du liquide à analyser. Les signaux transmis par le capteur 2 traduisent cette déformation du corps de capteur. Pour permettre l'analyse des résultats obtenus à partir des informations fournies par ledit capteur, ce capteur ou tout autre moyen de mesure équivalent est raccordé à des moyens de traitement et d'analyse en temps réel ou en différé et de préférence en continu des signaux produits par le capteur. Ces moyens de traitement et d'analyse, non représentés, peuvent être constitués par un ordinateur incorporant un logiciel d'acquisition et de traitement de données relié audit capteur. Un tel dispositif peut également comporter un afficheur pour exprimer les résultats obtenus. Généralement, ces moyens convertissent une tension en une valeur numérique. Ce dispositif comporte encore des moyens de génération d'une alimentation régulière du capteur. Ce dispositif peut encore comporter des moyens de mesure de la température, cette température étant affichée simultanément ou de manière alternée avec les informations relatives à la masse volumique et/ou à la densité. En effet, le traitement des informations permet d'afficher, à partir d'informations relatives à la masse volumique et d'informations relatives à la température, la densité du liquide dans lequel le dispositif est immergé. A titre de capteur, il peut encore être utilisé un capteur piézoélectrique couplé avec un convertisseur de charge. Cette configuration a l'avantage de ne présenter aucun vieillissement du capteur dans le temps et de prouver une excellente sensibilité du capteur aux variations rapides et un étalonnage linéaire. L'utilisation d'une résistance de détection d'effort à titre de capteur, associée à un convertisseur résistance-tension, permet de rendre le dispositif particulièrement économique. Tous ces types de capteurs ont leurs avantages et leurs inconvénients bien connus à l'homme de l'art.

Le dispositif de mesure de la masse volumique et/ou de la densité décrit ci-dessus sera de préférence utilisé dans des cuves présentant une profondeur inférieure à 10 mètres pour des mesures de la masse volumique de liquide comprise à l'intérieur de la plage 950 g/l - 1300 g/l pour des températures variant entre 15°C et 40°C.'

Il est à noter que la présence du lest 8 de l'enceinte 1 permet de conserver une mesure à l'intérieur d'une plage déterminée et permet d'obtenir une réaction du capteur à l'intérieur d'une plage déterminée en limitant les amplitudes de déplacement de l'enceinte.

## Revendications

1. Dispositif de mesure de la masse volumique et/ou de la densité d'un liquide du type comprenant une enceinte (1) étanche au liquide à mesurer,
**caractérisé en ce que** l'enceinte (1) est constituée d'une enveloppe rigide indéformable renfermant au moins un corps (3), dit corps de référence, maintenu en suspension dans ladite enceinte (1) à l'état totalement immergé de cette dernière par l'intermédiaire d'au moins un organe (4) de suspension faisant saillie à travers au moins un orifice (5) fermé de manière étanche de ladite enceinte (1), cette enceinte (1) étant mobile par rapport au corps (3) de référence pour occuper, à l'état totalement immergé, une position relative par rapport audit corps (3) fonction de la masse volumique du liquide à l'intérieur duquel le dispositif est immergé, cette position étant détectée et/ou mesurée par des moyens (2) de détection et/ou de mesure logé à l'intérieur de l'enceinte (1).

2. Dispositif de mesure selon la revendication 1,
**caractérisé en ce que** l'enceinte (1), mobile par rapport au corps (3) de référence pour occuper, à l'état totalement immergé, une position relative par rapport au corps (3) fonction de la masse volumique du liquide à l'intérieur duquel le dispositif est immergé, renferme des moyens (2) de mesure de force, tels qu'un capteur de force, cette enceinte exerçant, dans ladite position, directement ou par l'intermédiaire d'une pièce (9) solidaire en déplacement de l'enceinte, un effort de compression ou de traction sur les moyens (2) de mesure de forces limités en déplacement par le corps (3) de référence, lui-même insensible aux efforts exercés par ladite enceinte (1).

3. Dispositif de mesure selon la revendication 2,
**caractérisé en ce que**, à l'état suspendu du corps (3) de référence, les moyens (2) de mesure de forces sont positionnés au-dessus du corps (3) de référence.

4. Dispositif de mesure selon la revendication 2,
**caractérisé en ce que**, à l'état suspendu du corps (3) de référence, les moyens (2) de mesure de forces sont positionnés au-dessous du corps (3) de référence.

5. Dispositif de mesure selon l'une des revendications 2 à 3,
**caractérisé en ce que** les moyens de mesure de forces sont constitués d'un capteur (2) de forces comprenant une partie fixe et d'une partie mobile, la partie fixe étant couplée au corps (3) de référence, la partie mobile à l'enceinte (1).

6. Dispositif de mesure selon l'une des revendications 2 et 3,
**caractérisé en ce que** les moyens (2) de mesure de forces sont solidaires d'une paroi interne de l'enceinte (1).

7. Dispositif de mesure selon l'une des revendications 2 et 3,
**caractérisé en ce que** les moyens (2) de mesure de forces sont solidaires du corps (3) de référence.

8. Dispositif de mesure selon l'une des revendications 1 à 6,
**caractérisé en ce que** l'enceinte (1) comporte au moins deux orifices (5) de passage d'un organe de suspension, chaque orifice (5) étant fermé respectivement par l'intermédiaire d'une membrane (6) entourant ledit organe (7) de suspension.

9. Dispositif de mesure selon la revendication 8,
**caractérisé en ce que** les orifices (5) de passage d'un organe de suspension sont ménagés en regard et sont positionnés sur l'enceinte de manière coaxiale à l'axe vertical de suspension du corps (3) de référence.

10. Dispositif de mesure selon la revendication 8,
**caractérisé en ce que** les orifices (5) de passage d'un organe de suspension sont ménagés en regard et sont positionnés sur un axe sensiblement perpendiculaire à l'axe vertical de suspension du corps (3) de référence.

11. Dispositif de mesure selon l'une des revendications 1 à 9,
**caractérisé en ce qu'**au moins l'un des organes (4) de suspension est constitué d'un élément tubulaire pour le passage de fils nécessaires à l'électronique des moyens (2) de mesure.

12. Dispositif de mesure selon l'une des revendications 1 à 11,
**caractérisé en ce que** l'enceinte (1) affecte la forme d'un corps d'allure générale cylindrique, de préférence lesté.

13. Dispositif de mesure selon l'une des revendications 1 à 12,
**caractérisé en ce que** les moyens (2) de mesure et/ou de détection sont raccordés à des moyens de traitement et d'analyse en temps réel ou en différé et de préférence en continu des signaux produits par lesdits moyens (2) de mesure.

14. Dispositif de mesure selon l'une des revendications 2 à 13,
**caractérisé en ce que** les moyens (2) de mesure de forces sont constitués d'un corps déformable déformé en fonction de la position prise par l'enceinte (1) par rapport au corps (3) de référence, cette position étant directement fonction de la masse volumique du liquide à analyser.

## Claims

1. Device for measuring the specific gravity and/or density of a liquid, of the type comprising a chamber (1) which is leaktight for the liquid to be measured,
**characterised in that** the chamber (1) consists of a rigid undeformable casing containing at least one body (3), referred to as the reference body, held in suspension in the said chamber (1) while being fully immersed therein by means of at least one suspension member (4) extending through at least one orifice (5) of the said chamber (1), which orifice (5) is closed in a leaktight fashion, this chamber (1) being mobile relative to the reference body (3) so that in the fully immersed state it can occupy a relative position with respect to the said body (3) which is a function of the specific gravity of the liquid in which the device is immersed, this position being detected and/or measured by detection and/or measurement means (2) accommodated inside the chamber (1).

2. Measuring device according to Claim 1,
**characterised in that** the chamber (1) which is mobile relative to the reference body (3), so that in the fully immersed state it can occupy a relative position with respect to the said body (3) which is a function of the specific gravity of the liquid in which the device is immersed, contains force measurement means (2) such as a force sensor, and in the said position this chamber exerts a compression or traction force directly, or via a piece (9) linked in displacement with the chamber, on the force measurement means (2) which are limited in displacement by the reference body (3), which itself is insensitive to the forces exerted by the said chamber (1).

3. Measuring device according to Claim 2,
**characterised in that** when the reference body (3) is in the suspended state, the force measurement means (2) are positioned above the reference body (3).

4. Measuring device according to Claim 2,
**characterised in that** when the reference body (3) is in the suspended state, the force measurement means (2) are positioned below the reference body (3).

5. Measuring device according to either of Claims 2 and 3,
**characterised in that** the force measurement means consist of a force sensor (2) comprising a fixed part and a mobile part, the fixed part being coupled to the reference body (3), the mobile part being coupled to the chamber (1).

6. Measuring device according to either of Claims 2 and 3,
**characterised in that** the force measurement means (2) are secured to an inner wall of the chamber (1).

7. Measuring device according to either of Claims 2 and 3,
**characterised in that** the force measurement means (2) are secured to the reference body (3).

8. Measuring device according to one of Claims 1 to 6,
**characterised in that** the chamber (1) comprises at least two orifices (5) for a suspension member to pass through, each orifice (5) being closed respectively by means of a diaphragm (6) enclosing the said suspension member (7).

9. Measuring device according to Claim 8,
**characterised in that** the orifices (5) for a suspension member to pass through are formed opposite one another and are positioned on the chamber coaxially with the vertical suspension axis of the reference body (3).

10. Measuring device according to Claim 8,
**characterised in that** the orifices (5) for a suspension member to pass through are formed opposite one another and are positioned on an axis substantially perpendicular to the vertical suspension axis of the reference body (3).

11. Measuring device according to one of Claims 1 to 9,
**characterised in that** at least one of the suspension members (4) consists of a tubular element for wires to pass through, which are necessary for the electronics of the measurement means (2).

12. Measuring device according to one of Claims 1 to 11,
**characterised in that** the chamber (1) has the form of a body with a cylindrical overall shape, which is preferably ballasted.

13. Measuring device according to one of Claims 1 to 12,
**characterised in that** the measurement and/or detection means (2) are connected to means for real-time or offline and preferably continuous processing and analysis of the signals produced by the said measurement means (2).

14. Measuring device according to one of Claims 2 to 13,
**characterised in that** the force measurement means (2) consist of a deformable body which is deformed as a function of the position assumed by the chamber (1) with respect to the reference body (3), this position being directly a function of the specific gravity of the liquid to be analysed.

## Patentansprüche

1. Gerät zur Messung der Massendichte und/oder relativen Dichte von Flüssigkeiten mit einer gegen die zu messende Flüssigkeit abgedichteten Kammer (1), **dadurch gekennzeichnet, dass** die Kammer (1) aus einem unverformbaren, starren Gehäuse besteht, das mindestens einen so genannten Referenzkörper (3) umschließt, der im voll gefüllten Zustand der Kammer (1) in der Kammer (1) frei hängend von einem Aufhängungselement (4) gehalten wird, das durch eine dicht verschlossene Öffnung (5) der Kammer (1) hinausragt, wobei die Kammer (1) in Bezug auf den Referenzkörper (3) beweglich ist, um im voll gefüllten Zustand eine Position relativ zu dem Referenzkörper (3) einzunehmen, die von der Massendichte der Flüssigkeit, in die das Gerät eingetaucht ist, abhängig ist, wobei die Position von in der Kammer (1) angeordneten Erfassungs- und/oder Messmitteln (2) erfasst bzw. gemessen wird.

2. Messgerät nach Anspruch 1, **dadurch gekennzeichnet, dass** die Kammer (1), die in Bezug auf den Referenzkörper (3) beweglich ist, um im voll gefüllten Zustand eine Position relativ zu dem Referenzkörper (3) einzunehmen, die von der Massendichte der Flüssigkeit, in die das Gerät eingetaucht ist, abhängig ist, Kraftmessmittel (2) wie einen Kraftaufnehmer umschließt, wobei die Kammer in dieser Position unmittelbar oder über ein mit der Kammer verschiebbar verbundenes Teil (9) eine Druck- oder Zugkraft auf die Kraftmessmittel (2) aufbringt, deren Bewegung durch den Referenzkörper (3) begrenzt ist, der wiederum unempfindlich gegen die von der Kammer (1) aufgebrachten Kräfte ist.

3. Messgerät nach Anspruch 2, **dadurch gekennzeichnet, dass** die Kraftmessmittel (2) im hängenden Zustand des Referenzkörpers (3) über dem Referenzkörper (3) angebracht sind.

4. Messgerät nach Anspruch 2, **dadurch gekennzeichnet, dass** die Kraftmessmittel (2) im hängenden Zustand des Referenzkörpers (3) unter dem Referenzkörper (3) angebracht sind.

5. Messgerät nach einem der Ansprüche 2 bis 3, **dadurch gekennzeichnet, dass** die Kraftmessmittel aus einem Kraftaufnehmer (2) bestehen, der einen fest stehenden Teil und einen beweglichen Teil umfasst, wobei der fest stehende Teil an dem Referenzkörper (3) und der bewegliche Teil an der Kammer (1) befestigt ist.

6. Messgerät nach einem der Ansprüche 2 und 3, **dadurch gekennzeichnet, dass** die Kraftmessmittel (2) mit einer Innenwand der Kammer (1) verbunden sind.

7. Messgerät nach einem der Ansprüche 2 und 3, **dadurch gekennzeichnet, dass** die Kraftmessmittel (2) mit dem Referenzkörper (3) verbunden sind.

8. Messgerät nach einem der Ansprüche 1 bis 6, **dadurch gekennzeichnet, dass** die Kammer (1) mindestens zwei Öffnungen (5) für die Durchführung eines Aufhängungselementes umfasst, wobei jede Öffnung (5) durch jeweils eine Membran (6) verschlossen ist, die das Aufhängungselement (7) umgibt.

9. Messgerät nach Anspruch 8, **dadurch gekennzeichnet, dass** die Öffnungen (5) für die Durchführung eines Aufhängungselementes einander gegenüber angeordnet und koaxial zur vertikalen Aufhängungsachse des Referenzkörpers (3) an der Kammer angebracht sind.

10. Messgerät nach Anspruch 8, **dadurch gekennzeichnet, dass** die Öffnungen (5) für die Durchführung eines Aufhängungselementes einander gegenüber angeordnet und auf einer im Wesentlichen senkrecht zur vertikalen Aufhängungsachse des Referenzkörpers (3) verlaufenden Achse angebracht sind.

11. Messgerät nach einem der Ansprüche 1 bis 9, **dadurch gekennzeichnet, dass** mindestens eines der Aufhängungselemente (4) aus einem rohrförmigen Element für die Durchführung von Kabeln besteht, die für die Elektronik der Messmittel (2) erforderlich sind.

12. Messgerät nach einem der Ansprüche 1 bis 11, **dadurch gekennzeichnet, dass** die Kammer (1) als vorzugsweise beschwerter Körper mit einer allgemein zylindrischen Form ausgebildet ist.

13. Messgerät nach einem der Ansprüche 1 bis 12, **dadurch gekennzeichnet, dass** die Mess- und/oder Erfassungsmittel (2) an Mittel angeschlossen sind, die die von den Messmitteln (2) erzeugten Signale in Echtzeit oder zeitverzögert und vorzugsweise kontinuierlich verarbeiten und analysieren.

14. Messgerät nach einem der Ansprüche 2 bis 13, **dadurch gekennzeichnet, dass** die Kraftmessmittel (2) aus einem verformbaren Körper bestehen, der in Abhängigkeit von der Position verformt wird, die die Kammer (1) relativ zu dem Referenzkörper (3) einnimmt, wobei diese Position unmittelbar von der Massendichte der zu prüfenden Flüssigkeit abhängig ist.
